(19) Europäisches Patentamt
European Patent Office
Office européen des brevets

(11) **EP 4 028 702 B1**

(12) **EUROPEAN PATENT SPECIFICATION**

(45) Date of publication and mention
of the grant of the patent:
**30.10.2024 Bulletin 2024/44**

(21) Application number: **20776044.8**

(22) Date of filing: **10.09.2020**

(51) International Patent Classification (IPC):
**F25B 49/02** $^{(2006.01)}$ **F25B 49/00** $^{(2006.01)}$
**F25B 13/00** $^{(2006.01)}$ **F25B 9/00** $^{(2006.01)}$

(52) Cooperative Patent Classification (CPC):
**F25B 49/02; F25B 9/006; F25B 49/005;**
F25B 13/00; F25B 2313/0312; F25B 2313/0313;
F25B 2400/08; F25B 2500/19; F25B 2600/0251;
F25B 2700/195; F25B 2700/197; F25B 2700/2104;
F25B 2700/2106

(86) International application number:
**PCT/US2020/050172**

(87) International publication number:
**WO 2021/050707 (18.03.2021 Gazette 2021/11)**

(54) **DIAGNOSTIC FOR REFRIGERANT COMPOSITION VERIFICATION**

DIAGNOSE ZUR ÜBERPRÜFUNG EINER KÜHLMITTELZUSAMMENSETZUNG

DIAGNOSTIC POUR VÉRIFICATION DE COMPOSITION DE FLUIDE FRIGORIGÈNE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **12.09.2019 US 201962899418 P**

(43) Date of publication of application:
**20.07.2022 Bulletin 2022/29**

(73) Proprietor: **Carrier Corporation
Palm Beach Gardens, FL 33418 (US)**

(72) Inventor: **LORD, Richard G.
Palm Beach Gardens, FL 33418 (US)**

(74) Representative: **Dehns
St. Bride's House
10 Salisbury Square
London EC4Y 8JD (GB)**

(56) References cited:
**US-A1- 2014 216 082** **US-A1- 2014 298 842**
**US-A1- 2015 075 194**

**Description**

The present invention relates to a refrigeration system, and more particularly to a method of determining whether a fluid in a refrigeration system represents a correct refrigerant composition.

Buildings, such as commercial buildings including university buildings, office buildings, hospitals, restaurants and residential buildings such as single family, multiple family and high rise residential, and the like, include refrigeration systems which are operable to control the climate inside the building. A typical refrigeration system includes an evaporator, and indoor circulation fan, one or more compressors, a condenser, an expansion valve and a control system. This system and components utilize circulating refrigerant to maintain an indoor temperature of the building at a desired level.

Traditionally, refrigeration systems have used A1 refrigerants, which are non-flammable. However, global warming and other environmental concerns have caused the heating, ventilation, and air conditioning (HVAC) industry to explore alternative low Global Warming Potential (GWP) refrigerants, such as A2L refrigerants, in place of existing A1 refrigerants in HVAC systems. Many low GWP refrigerants are mixtures. Although these alternative refrigerants have a lower GWP, they are often are mildly flammable. US 2014/216082 A1 discloses a method for a refrigeration system and a refrigeration system according to the preamble of claim 1 and claim 9, respectively.

According to a first aspect of the present invention, there is provided a method for a refrigeration system as defined in claim 1 and comprises measuring a pressure of fluid in a refrigerant line of a heat exchanger of a refrigeration system, and measuring a value of at least one of a dewpoint temperature and a bubble point temperature of the fluid at the measured temperature. The method also includes determining an expected value associated with said at least one of the dewpoint temperature and the bubble point temperature of the fluid at the measured pressure, and determining whether the fluid includes a correct refrigerant composition based on a comparison of the measured and expected values. The refrigeration system includes an indoor heat exchanger and an outdoor heat exchanger, and the method includes determining an ambient temperature of each of the indoor heat exchanger and the outdoor heat exchanger, and selecting whichever of the indoor heat exchanger and outdoor heat exchanger has a lower ambient temperature as the heat exchanger.

In a further embodiment of any of the foregoing embodiments, the measuring steps are performed while a compressor of the refrigeration system is turned off.

In a further embodiment of any of the foregoing embodiments, prior to the measuring steps and while the compressor is turned off, a fan is operated, for a predefined time period, to pass air through the heat exchanger having the lower ambient temperature.

In a further embodiment of any of the foregoing embodiments, determining whether the fluid has a correct refrigerant composition includes determining a difference between the measured value of and expected value associated with each of at least one of the dewpoint temperature and the bubble point temperature. The method also includes determining that the fluid represents a correct refrigerant composition based on each difference being within a predefined error threshold, and determining that the fluid does not represent the correct refrigerant composition based on at least one of the differences being greater than the predefined error threshold.

In a further embodiment of any of the foregoing embodiments, determining that the fluid does not represent the correct refrigerant includes determining that the fluid has an incorrect refrigerant or contaminated refrigerant.

In a further embodiment of any of the foregoing embodiments, the at least one of the dewpoint temperature and the bubble point temperature includes a single one of the dewpoint temperature and the bubble point temperature, and each difference includes a single difference.

In a further embodiment of any of the foregoing embodiments, the at least one of the dewpoint temperature and the bubble point temperature includes each of the dewpoint temperature and the bubble point temperature, and each difference includes a dewpoint difference and a bubble point difference.

In a further embodiment of any of the foregoing embodiments, determining an expected value includes determining an expected glide of the fluid at the measured pressure based on a difference between the expected dewpoint and bubble point temperatures. The determination of whether the fluid has a correct refrigerant composition includes determining an actual glide of the fluid based on a difference between the measured dewpoint and bubble point temperatures, determining that the fluid represents a correct refrigerant composition based on a glide difference between the expected glide and actual glide being within a predefined error threshold, and determining that the fluid does not represent the correct refrigerant composition based on the glide difference being greater than the predefined error threshold.

In a further embodiment of any of the foregoing embodiments, the correct refrigerant composition includes a correct mixture of multiple constituent fluids.

According to a second aspect of the present invention, there is provided a refrigeration system as defined in claim 9 and includes a heat exchanger configured to exchange heat with fluid in a refrigerant line, a pressure sensor configured to measure a pressure of the fluid, at least one temperature sensor configured to measure a temperature of the fluid. A controller is configured to utilize the at least one temperature sensor to measure a value of at least one of a dewpoint temperature and a bubble point temperature of the fluid at the measured pressure, determine an expected value associated with said at least one of the dewpoint temperature and the bubble point temperature of the fluid at the measured pressure, and determine whether the fluid includes a correct refrigerant composition based on a comparison of the measured and expected values. The refrigeration system includes an indoor heat exchanger and an outdoor heat exchanger each operable to exchange heat with the fluid in the refrigerant line. The controller is configured to determine an ambient temperature of each of the indoor heat exchanger and the outdoor heat exchanger, and select whichever of the indoor heat exchanger and outdoor heat exchanger has a lower ambient temperature as the heat exchanger.

In a further embodiment of any of the foregoing embodiments, a compressor is configured to compress the fluid in the refrigerant line, and the controller is configured to perform the comparison based on readings from the pressure sensor and at least one temperature sensor taken when the compressor is turned off.

In a further embodiment of any of the foregoing embodiments, the controller is configured to operate a fan to pass air through the heat exchanger for a predefined time period prior to obtaining the readings from the pressure sensor and at least one temperature sensor.

In a further embodiment of any of the foregoing embodiments, to determine whether the fluid has a correct refrigerant composition, the controller is configured to determine a difference between the measured value of and expected value associated with each of at least one of the dewpoint temperature and the bubble point temperature, determine that the fluid represents a correct refrigerant composition based on each difference being within a predefined error threshold, and determine that the fluid does not represent the correct refrigerant composition based on at least one of the differences being greater than the predefined error threshold.

In a further embodiment of any of the foregoing embodiments, to determine that the fluid does not represent the correct refrigerant, the controller is configured to determine that the fluid includes an incorrect refrigerant or contaminated refrigerant.

In a further embodiment of any of the foregoing embodiments, the at least one of the dewpoint temperature and the bubble point temperature includes a single one of the dewpoint temperature and the bubble point temperature, and each difference includes a single difference.

In a further embodiment of any of the foregoing embodiments, the at least one of the dewpoint temperature and the bubble point temperature includes each of the dewpoint temperature and the bubble point temperature, and a single difference includes a dewpoint difference and a bubble point difference.

In a further embodiment of any of the foregoing embodiments, to determine the expected value, the controller is configured to determine an expected glide of the fluid at the measured pressure based on a difference between the expected dewpoint and bubble point temperatures. To determine whether the fluid includes a correct refrigerant composition, the controller is configured to determine an actual glide of the fluid based on a difference between the measured dewpoint and bubble point temperatures, determine that the fluid represents a correct refrigerant composition based on a glide difference between the actual and expected glide being within a predefined error threshold, and determine that the fluid does not represent the correct refrigerant composition based on the glide difference being greater than the predefined error threshold.

In a further embodiment of any of the foregoing embodiments, the correct refrigerant composition includes a correct mixture of multiple constituent fluids.

The embodiments, examples, and alternatives of the preceding paragraphs, the claims, or the following description and drawings, including any of their various aspects or respective individual features, may be taken independently or in any combination. Features described in connection with one embodiment are applicable to all embodiments, unless such features are incompatible.

Figure 1 is a schematic view of an example refrigeration system which is a cooling system.
Figure 2 is a schematic view of an example refrigeration system that utilizes a heat pump.
Figure 3 is a schematic view of an example heat exchanger.
Figure 4 is a schematic view of an example temperature vs. enthalpy diagram for a refrigerant mixture.
Figure 5 is a flowchart illustrating an example method for a refrigeration system.
Figure 6 is a flowchart illustrating another example method for a refrigeration system.
Figure 7 is a schematic view of a controller for a refrigeration system.

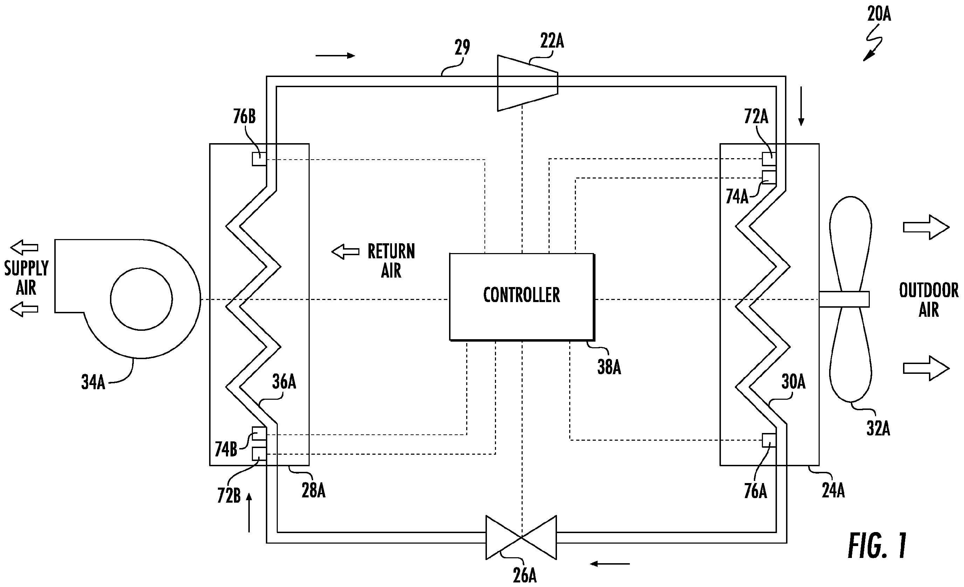

Figure 1 is a schematic view of an example refrigeration system 20A that includes a compressor 22A, a first heat exchanger 24A, an expansion device 26A, and a second heat exchanger 28A. Refrigerant in a suction line 29 is compressed in the compressor 22A, and exits the compressor 22A at a high pressure, high temperature, and a high enthalpy, and flows to the first heat exchanger 24A. Although only a single compressor 22A is shown, it is understood that multiple compressors could be used.

In a cooling operation, the first heat exchanger 24A operates as a condenser that rejects heat. In the first heat exchanger 24A, refrigerant flows through one or more coil tubes 30A and rejects heat to air that is drawn over the coil tube(s) 30A by a blower fan 32A. In the first heat exchanger 24A, refrigerant is condensed into a liquid that exits the first heat exchanger 24A at a low enthalpy and a high pressure. The heat rejection medium could be water in a shell and tube arrangement, for example.

The refrigerant flows from the first heat exchanger 24A to the expansion device 26A, such as a thermostatic expansion valve or electronic expansion valve. The expansion valve 26 reduces the refrigerant to a low pressure and temperature. After expansion, the refrigerant flows through the second heat exchanger 28A, which operates as an evaporator that accepts heat. A blower fan 34A (which may be a centrifugal fan) draws air through the second heat exchanger 28A and over a coil 36A. The refrigerant flowing through the coil 36A accepts heat from air, exiting the second heat exchanger 28A at a high enthalpy and a low pressure. The refrigerant then flows to the compressor 22A, completing its refrigeration cycle. The cooling medium could be air or could be water in a shell and tube arrangement, for example.

A controller 38A controls operation of each of the compressor 22A, fan 32A, and fan 34A and operates each of these components during a heat exchange mode when the refrigeration system 20A is running. In the heat exchange mode, the refrigeration system 20A is operated to cool and dehumidify air. In embodiments utilizing an electronic expansion valve for the expansion device 26A, the controller 38A could also control the expansion device 26A, and operate the expansion device 26A in the heat exchange mode.

Each heat exchanger 24A, 28A has an associated pressure sensor 72, first temperature sensor 74, and second temperature sensor 76, that are in communication with the controller 38A, and will be discussed in greater detail below.

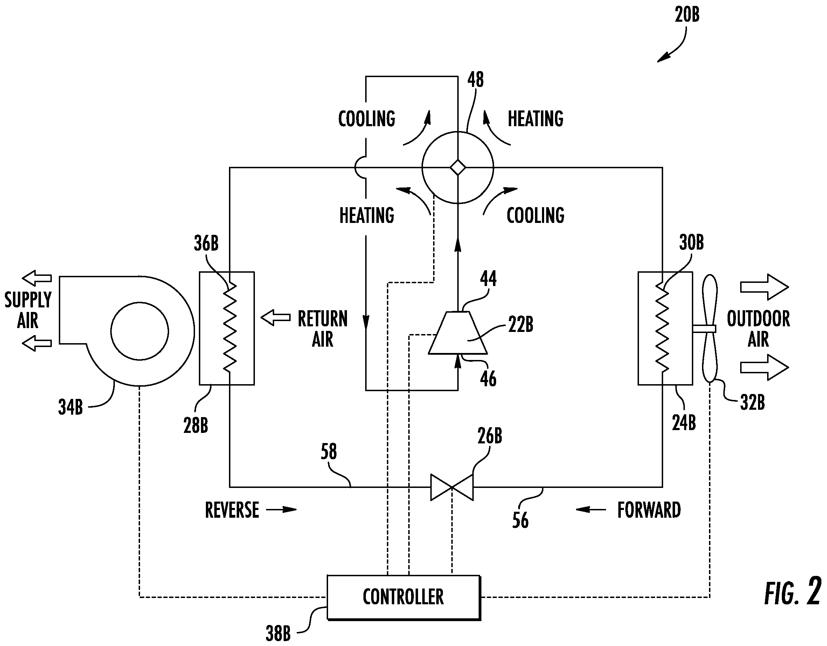

Figure 2 illustrates another type of refrigeration system, which is a heat pump 20B, capable of operating in both cooling and heating modes. The heat pump 20B includes a compressor 22B that delivers refrigerant through a discharge port 44 that is returned back to the compressor 22B through a suction port 46. Although only a single compressor 22B is shown, it is understood that multiple compressors could be used.

Refrigerant moves through a four-way valve 48 that can be switched between heating and cooling positions to direct the refrigerant flow in a desired manner (indicated by the arrows associated with valve 48 in Figure 2) depending upon the requested mode of operation, as is well known in the art. When the valve 48 is positioned in the cooling position, refrigerant flows from the discharge port 44 through the valve 48 to an outdoor heat exchanger 24B, which includes a coil 30B, and where heat from the compressed refrigerant is rejected to a secondary fluid, such as ambient air. A fan 32B is used to provide airflow through the outdoor heat exchanger 24B.

The refrigerant flows from the outdoor heat exchanger 24B through a first fluid passage 56 into an expansion device 26B, which can be a thermostatic expansion valve or electronic expansion valve, for example. The refrigerant when flowing in this forward direction expands as it moves from the first fluid passage 56 to a second fluid passage 58 thereby reducing its pressure and temperature. The expanded refrigerant flows through an indoor heat exchanger 28B, which includes a coil 36B, to accept heat from another secondary fluid and supply cold air indoors. A fan 34B (which may be a centrifugal fan) provides air flow through the heat exchanger 28B. The refrigerant returns from the indoor exchanger 28B to the suction port 46 through the valve 48.

When the valve 48 is in the heating position, refrigerant flows from the discharge port 44 through the valve 48 to the indoor heat exchanger 28B where heat is rejected to the indoors. The refrigerant flows from the indoor heat exchanger 28B through second fluid passage 58 to the expansion device 26B. As the refrigerant flows in this reverse direction from the second fluid passage 58 through the expansion device 26B to the first fluid passage 56, the refrigerant flow is more restricted in this direction as compared to the forward direction. The refrigerant flows from the first fluid passage 56 through the outdoor heat exchanger 24B, four-way valve 48 and back to the suction port 46 through the valve 48.

A controller 38B controls operation of each of the compressor 22B, fan 32, fan 34B, and valve 48 when the heat pump 20B is operating in a heating or cooling mode. In embodiments utilizing an electronic expansion valve for the expansion device 26B, the controller 38B would also control the expansion device 26B while the heat pump 20B is operating in a heating or cooling mode.

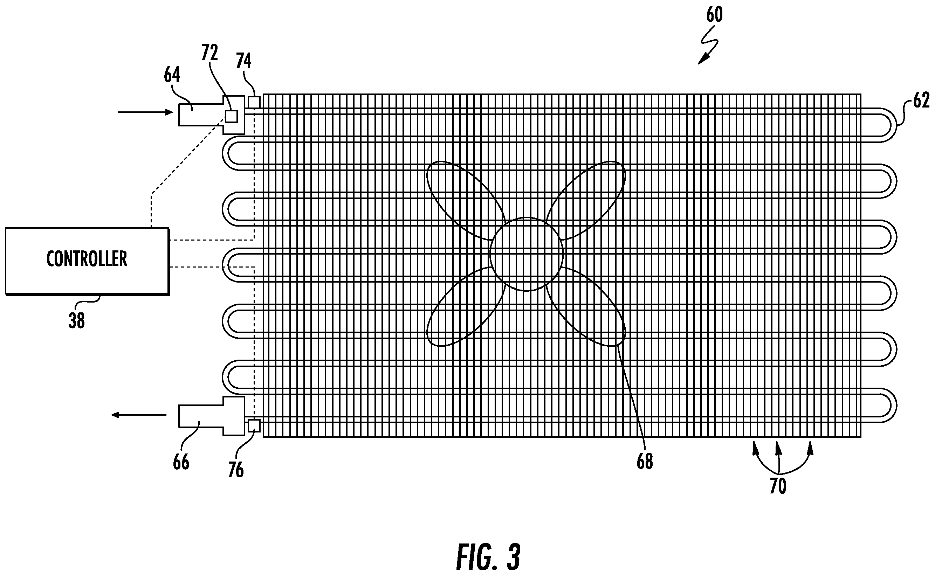

Although not shown in Figure 3, it is understood that each heat exchanger 24B, 28B could also include the pressure sensor 72 and temperature sensors 74, 76 of Figure 1.

The refrigeration system 20 can be used in a number of applications, such as a split system residential or commercial unit or a packaged residential or commercial rooftop. When used with a split system, the heat exchanger 28 is located inside a residence or building and the fan 34 draws air through the heat exchanger 28. Also, when used in the split system, the heat exchanger 24 is located outside the residence or building.

When used with a packaged unit the refrigeration system 20 is located on a rooftop or an exterior of a building. In this configuration, the refrigeration system 20 includes an evaporator section that draws air from inside the building and conditions it with the heat exchanger 28 and directs the air back into the building. Additionally, the refrigeration system 20 for the rooftop application would include an outdoor section with the fan 32 drawing ambient air through the heat exchanger 24 to remove heat from the heat exchanger 24 as described above.

Figure 3 is a schematic view of an example heat exchanger 60 which may be used as either of the heat exchangers 24 or 28. The heat exchanger 60 includes a coil 62 that provides a flow of refrigerant from an inlet 64 to an outlet 66. A fan 68 is configured to provide airflow across the coil 62, and facilitate a heat exchange with the coil 62. A plurality of fins 70 increase a surface area of the heat exchange 60 for maximizing heat exchange.

The pressure sensor 72 (e.g., a pressure transducer) is operable to measure a pressure of refrigerant entering the coil 62. Although depicted within the inlet 64, it is understood that other locations could be utilized (e.g., outside but in proximity to the inlet 64). The first temperature sensor 74 is configured to measure a dewpoint temperature of the refrigerant at or near the top of the coil. Dewpoint temperature refers to a temperature below which refrigerant droplets begin to condense.

The second temperature sensor 76 is configured to measure a bubble point temperature of the refrigerant at or near the bottom of the coil and where liquid refrigerant has condensed. Bubble point temperature refers to a temperature at which all or substantially all refrigerant has condensed to liquid. The sensors 72 and 74 are at or proximate to a top of the coil 62, and the sensor 76 is at or proximate to a bottom of the coil 62.

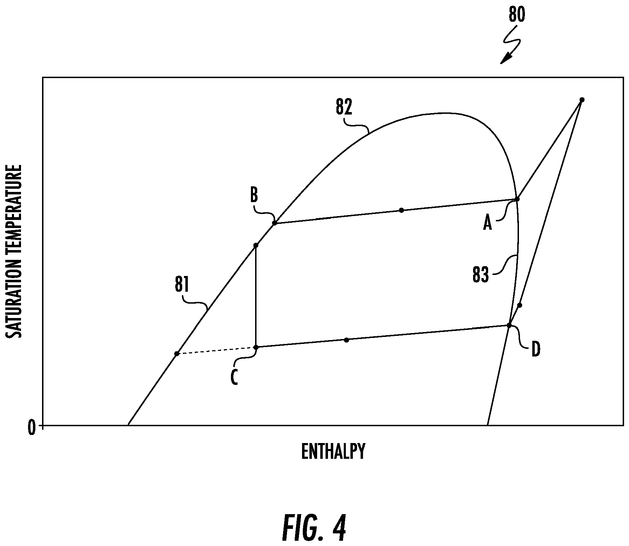

Figure 4 illustrates an example temperature vs. enthalpy diagram for a refrigerant mixture. A liquid line 81 is depicted on the left hand side of the curve 82, and a vapor line 83 is depicted on a right hand side of the curve 82. Line segment A-B indicates a decreased temperature as refrigerant flows though the heat exchanger 24 which serves as the condenser. Line segment B-C represents a change in enthalpy as refrigerant passes through the expansion device 26. Line segment C-D represents refrigerant passing through the heat exchanger 28 which operates as an evaporator.

Point A represents a dewpoint of the heat exchanger 24, and point B represents a bubble point of the heat exchanger 24. Similarly, point D represents a dewpoint of the heat exchanger 28, and point C represents a bubble point of the heat exchanger 28. As shown in Figure 4, the line segments A-B and C-D have non-zero slopes, which indicate that the refrigerant is a refrigerant mixture having a "glide" in each of the heat exchangers 24, 28. The glide of each heat exchanger 24, 28 can be calculated based on a difference between its dewpoint temperature and bubble point temperature, using equation 1 below.

$$Glide = Temp\_dew - T\_bubble \qquad\qquad eq. 1$$

where:

   $T\_dew$ refers to the dewpoint temperature; and
   $T\_bubble$ refers to the bubblepoint temperature.

For refrigerants that utilize a single constituent fluid type (i.e., a non-mixture refrigerant), the glide is expected to be zero, within a margin of error. However, for refrigerant mixtures, the glide is often expected to be non-zero as the constituent fluids likely have different condensation properties as well as boil points.

The controller 38 is operable to detect whether a correct refrigerant composition is being utilized based on the dewpoint temperature, the bubble point temperature, and/or the "glide" of the refrigerant. The controller 38 is configured to measure a pressure of fluid in a refrigerant line of a heat exchanger of the refrigeration system 20 using pressure sensor 72, and measure a value of at least one of a dewpoint temperature and a bubble point temperature of the fluid at the measured temperature. The controller 38 is further configured to determine an expected value associated with the at least one of the dewpoint temperature and the bubble point temperature of the fluid at the measured pressure (e.g., an expected dewpoint temperature, expected bubble point temperature, or expected glide), and determine whether the fluid includes a correct refrigerant composition based on a comparison of the measured and expected values.

If a difference between an expected and measured glide values exceeds a corresponding predefined threshold that is indicative of an incorrect refrigerant mixture which includes an incorrect ratio of refrigerants, possibly due to leakage. If a difference between expected and measured dewpoint values or expected and measured bubble point temperatures exceeds a corresponding predefined threshold, that is indicative of an incorrect refrigerant composition due to an incorrect refrigerant being used and/or due to an otherwise correct refrigerant being contaminated (e.g., by non-condensable air or nitrogen).

The expected dewpoint temperature and expected bubble point temperatures can be determined by utilizing the measured pressure (e.g., with a temperature lookup table stored in the controller 38).

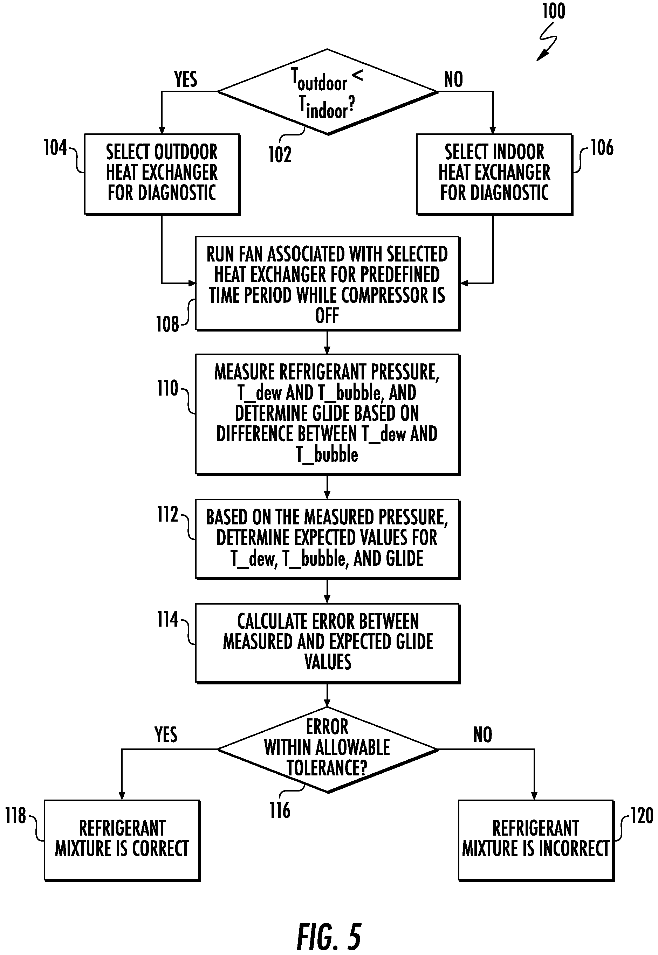

Figure 5 is a flowchart illustrating an example method 100 for a refrigeration system 20 for detecting whether an incorrect refrigerant mixture is present. The controller is configured to compare an indoor ambient temperature $T\_indoor$ and an outdoor ambient temperature $T\_outdoor,$ and determine which is lower (step 102). Whichever of the indoor heat exchanger (e.g., heat exchanger 28) and outdoor heat exchanger (e.g., heat exchanger 24) has a lower ambient temperature is selected as the heat exchanger for subsequent steps.

Thus, if the outdoor ambient temperature is lower than the indoor ambient temperature (a "yes" to step 102), the outdoor heat exchanger (e.g., heat exchanger 24) is selected for a diagnostic test (step 104). Otherwise, if the indoor ambient temperature is lower than the outdoor ambient temperature (a "no" to step 102), the indoor heat exchanger (e.g., heat exchanger 28) is selected for the diagnostic test (step 106).

The fan associated with the selected heat exchanger is run for a predefined time period while the compressor 22 is off (step 108), which helps to migrate refrigerant into the coil of the selected heat exchanger, including both liquid and vapor refrigerant, such that the heat exchanger has liquid at the bottom and vapor at the top of its coil, which enables the measuring the of dew point and bubble point temperatures. The compressor being off enables looking at the conditions of the refrigerant while there is substantially no flow and substantially no heat transfer, which is an advantageous time to measure the liquid bubble point temperature and vapor bubble point temperature at the top and bottom of the coil.

While the compressor 22 is off, the controller 38 measures the refrigerant pressure using pressure sensor 72, measures the dewpoint and bubble point temperatures using the temperature sensors 74, 76 at the measured pressure, and determines a glide based on the difference (step 110).

Based on the measured pressure, the controller 38 determines expected values for the dewpoint temperature, bubble point temperature, and glide (e.g., using a repository of stored values in a lookup table) (step 112).

The controller 38 calculates an error between the measured and expected glide values (step 114). This may be calculated using equation 2 below, for example.

$$Glide\_error = Glide\_reference - Glide\_measured \qquad \text{eq. 2}$$

If a magnitude of the error is within an allowable tolerance by being less than a predefined threshold (a "yes" to step 116), the controller 38 determines that the refrigerant mixture is correct (step 118). Otherwise, if a magnitude of the error is outside an allowable tolerance by being greater than a predefined threshold (a "no" to step 116), the controller 38 determines that the refrigerant mixture is incorrect, and includes an incorrect ratio of constituent refrigerants (step 120).

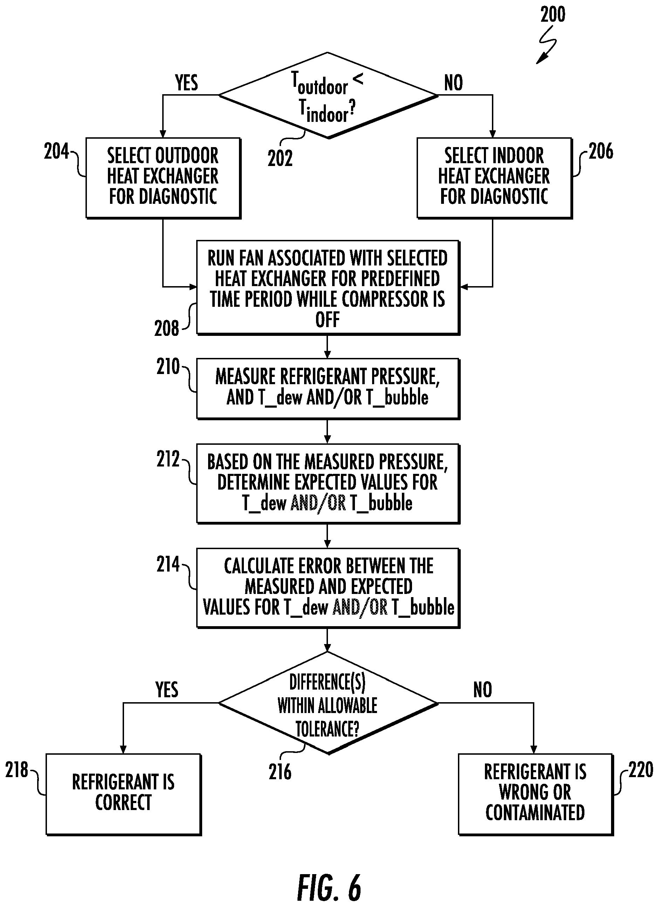

Figure 6 is a flowchart illustrating example method 200 for a refrigeration system 20 for detecting whether an incorrect refrigerant is present. Steps 202-208 of Figure 5 are the same as steps 102-108 of Figure 4.

Having running the fan in step 208, the controller 38 measures the refrigerant pressure using pressure sensor 72 and also measures one or both of the dewpoint temperature and bubble point temperature while the compressor 22 is off (step 210).

Based on the measured pressure, the controller 38 determines expected values for the dewpoint temperature and/or the bubble point temperature (e.g., using a repository of stored values in a lookup table) (step 212).

The controller 38 calculates an error between the measured and expected dewpoint temperature and/or determines an error between the measured and expected bubble point temperature (step 214). These calculations can be performed using equations 3 and 4 below, for example.

$$T\_dew\_error = T\_dew\_ref - T\_dew\_meas \qquad \text{eq. 3}$$

where:

$T\_dew\_ref$ refers to the reference dewpoint temperature value; and
$T\_dew\_meas$ refers to measured dewpoint temperature value.

$$T\_bubble\_error = T\_bubble\_ref - T\_bubble\_meas \qquad \text{eq. 4}$$

where:

$T\_bubble\_ref$ refers to the reference bubble point temperature value; and
$T\_bubble\_meas$ refers to measured bubble point temperature value.

If a magnitude of the error value(s) are within a respective allowable tolerance by being less than a respective predefined threshold (a "yes" to step 216), the controller 38 determines that the correct refrigerant is in use (step 218). If a magnitude of either error value is outside a respective allowable tolerance by being greater than a respective predefined threshold (a "no" to step 216), the controller 38 determines that the refrigerant is wrong or contaminated (step 220). The refrigerant at issue in step 220 could be a single refrigerant (i.e., a non-mixture), or could be a refrigerant mixture.

The controller can make the determination of step 220 using only a dew point temperature error, only a bubble point temperature error, or both of the dew point and bubble point temperature errors.

The allowable tolerances used in steps 116 and 216 would depend on the refrigerant being used.

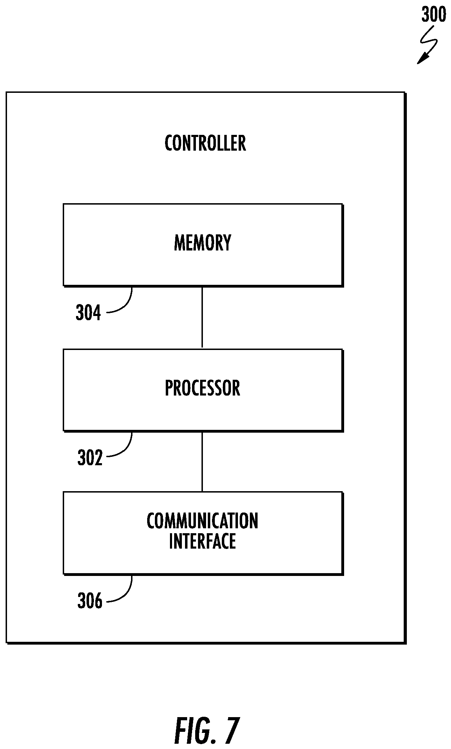

Figure 7 is a schematic view of a controller 300 that can be used as either of the controllers 38A-B. The controller 300 includes a processor 302 that is operatively connected to memory 304 and a communication interface 306. The processor 302 may include one or more microprocessors, microcontrollers, application specific integrated circuits (ASICs), or the like, for example.

The memory 304 can include any one or combination of volatile memory elements (e.g., random access memory (RAM, such as DRAM, SRAM, SDRAM, VRAM, etc.)) and/or nonvolatile memory elements (e.g., ROM, hard drive, tape, CD-ROM, etc.). Moreover, the memory 304 may incorporate electronic, magnetic, optical, and/or other types of storage media. The memory 304 can also have a distributed architecture, where various components are situated remotely from one another, but can be accessed by the processor 302. The memory 304 could be used to store the expected dewpoint, bubble point, and/or glide values for the refrigeration system 20 at a plurality of different pressures.

The communication interface 306 is configured to facilitate communication between the controller 300 and some or all of the compressor 22, fans 32 and/or 34, and expansion device 26 (if it is an electronic device), pressure sensor 72, and temperature sensors 74, 76. In one example, multiple controllers 300 are included (e.g., one controller for general operation of the refrigeration system 20 in the heat exchanging mode, and one controller for performing the methods 100 and/or 200). In one example, the communication interface 306 includes a wireless interface for wireless communication and/or a wired interface for wired communications.

Although example embodiments have been disclosed, a worker of ordinary skill in this art would recognize that certain modifications would come within the scope of the invention, which is defined by the claims. For that reason, the following claims should be studied to determine the scope and content of the invention.

**Claims**

1. A method (100) for a refrigeration system (20), comprising:

   measuring (110) a pressure of fluid in a refrigerant line of a heat exchanger (24; 28) of a refrigeration system;
   measuring (110; 210) a value of at least one of a dewpoint temperature and a bubble point temperature of the fluid at the measured pressure;
   determining (112; 212) an expected value associated with said at least one of the dewpoint temperature and the bubble point temperature of the fluid at the measured pressure; and
   determining (116; 216) whether the fluid includes a correct refrigerant composition based on a comparison of the measured and expected values,
   wherein
   the refrigeration system includes an indoor heat exchanger (28) and an outdoor heat exchanger (24), **characterised by**
   the method comprising:

      determining (102; 202) an ambient temperature of each of the indoor heat exchanger and the outdoor heat exchanger; and
      selecting (104, 106; 204, 206) whichever of the indoor heat exchanger and outdoor heat exchanger has a lower ambient temperature as the heat exchanger.

2. The method of claim 1, wherein the measuring steps are performed while a compressor (22) of the refrigeration system is turned off.

3. The method of claims 1 or 2, comprising:
   prior to the measuring steps and while the compressor is turned off, operating a fan (68) for a predefined time period to pass air through the heat exchanger.

4. The method of any preceding claim, wherein said determining whether the fluid includes a correct refrigerant composition comprises:

   determining a difference between the measured value of and expected value associated with each of said at least one of the dewpoint temperature and the bubble point temperature;
   determining that the fluid represents a correct refrigerant composition based on each difference being within a predefined error threshold;
   determining that the fluid does not represent the correct refrigerant composition based on at least one of the differences being greater than the predefined error threshold.

5. The method of claim 4, wherein said determining that the fluid does not represent the correct refrigerant comprises determining that the fluid includes an incorrect refrigerant or contaminated refrigerant.

6. The method of claims 4 or 5, wherein:

said at least one of the dewpoint temperature and the bubble point temperature comprises a single one of the dewpoint temperature and the bubble point temperature; and
said each difference includes a single difference.

7. The method of claims 4 or 5, wherein:

said at least one of the dewpoint temperature and the bubble point temperature comprises each of the dewpoint temperature and the bubble point temperature; and
said each difference includes a dewpoint difference and a bubble point difference.

8. The method of any preceding claim, wherein:

said determining an expected value comprises determining an expected glide of the fluid at the measured pressure based on a difference between the expected dewpoint and bubble point temperatures; and
said determining whether the fluid includes a correct refrigerant composition comprises:

determining an actual glide of the fluid based on a difference between the measured dewpoint and bubble point temperatures;
determining that the fluid represents a correct refrigerant composition based on a glide difference between the actual and expected glide being within a predefined error threshold; and
determining that the fluid does not represent the correct refrigerant composition based on the glide difference being greater than the predefined error threshold.

9. A refrigeration system (20) comprising:

a heat exchanger (24; 28) configured to exchange heat with fluid in a refrigerant line;
a pressure sensor (72) configured to measure a pressure of the fluid;
at least one temperature sensor (74, 76) configured to measure a temperature of the fluid; and
a controller (38) configured to:

utilize the at least one temperature sensor to measure (110; 210) a value of at least one of a dewpoint temperature and a bubble point temperature of the fluid at the measured pressure;
determine (112; 212) an expected value associated with said at least one of the dewpoint temperature and the bubble point temperature of the fluid at the measured pressure; and
determine (116; 216) whether the fluid includes a correct refrigerant composition based on a comparison of the measured and expected values,

wherein
the refrigeration system includes an indoor heat exchanger (28) and an outdoor heat exchanger (24) each operable to exchange heat with the fluid in the refrigerant line; **characterised in that**
the controller is configured to:

determine (102; 202) an ambient temperature of each of the indoor heat exchanger and the outdoor heat exchanger; and
select (104, 106; 204, 206) whichever of the indoor heat exchanger and outdoor heat exchanger has a lower ambient temperature as the heat exchanger.

10. The refrigeration system of claim 9, comprising:

a compressor (22) configured to compress the fluid in the refrigerant line;
wherein the controller is configured to perform the comparison based on readings from the pressure sensor and at least one temperature sensor taken when the compressor is turned off.

**11.** The refrigeration system of claims 9 or 10, comprising

a fan (68);
wherein the controller is configured to operate the fan to pass air through the heat exchanger for a predefined time period prior to obtaining the readings from the pressure sensor and the at least one temperature sensor.

**12.** The refrigeration system of any preceding claim, wherein to determine whether the fluid includes a correct refrigerant composition, the controller is configured to:

determine a difference between the measured value of and expected value associated with each of said at least one of the dewpoint temperature and the bubble point temperature;
determine that the fluid represents a correct refrigerant composition based on each difference being within a predefined error threshold;
determine that the fluid does not represent the correct refrigerant composition based on at least one of the differences being greater than the predefined error threshold.

**13.** The refrigeration system of claim 12, wherein to determine that the fluid does not represent the correct refrigerant, the controller is configured to determine that the fluid includes an incorrect refrigerant or contaminated refrigerant.

**14.** The refrigeration system of claims 12 or 13, wherein:

said at least one of the dewpoint temperature and the bubble point temperature comprises each of the dewpoint temperature and the bubble point temperature; and
said each difference includes a dewpoint difference and a bubble point difference.

**15.** The refrigeration system of any preceding claim, wherein:

to determine the expected value, the controller is configured to determine an expected glide of the fluid at the measured pressure based on a difference between the expected dewpoint and bubble point temperatures; and
to determine whether the fluid includes a correct refrigerant composition, the controller is configured to:

determine an actual glide of the fluid based on a difference between the measured dewpoint and bubble point temperatures;
determine that the fluid represents a correct refrigerant composition based on a glide difference between the actual and expected glide being within a predefined error threshold; and
determine that the fluid does not represent the correct refrigerant composition based on the glide difference being greater than the predefined error threshold.


**Patentansprüche**

**1.** Verfahren (100) für ein Kühlsystem (20), Folgendes umfassend:

Messen (110) eines Fluiddrucks in einer Kühlmittelleitung eines Wärmetauschers (24; 28) eines Kühlsystems;
Messen (110; 210) eines Wertes von mindestens einer von einer Taupunkttemperatur und einer Blasenpunkttemperatur des Fluids bei dem gemessenen Druck;
Bestimmen (112; 212) eines erwarteten Werts, der mindestens einer von der Taupunkttemperatur und der Blasenpunkttemperatur des Fluids bei dem gemessenen Druck zugeordnet ist; und
Bestimmen (116; 216), ob das Fluid eine korrekte Kühlmittelzusammensetzung beinhaltet, basierend auf einem Vergleich des gemessenen und des erwarteten Werts, wobei
das Kühlsystem einen Innenraumwärmetauscher (28) und einen Außenwärmetauscher (24) beinhaltet, **dadurch gekennzeichnet, dass**
das Verfahren Folgendes umfasst:

Bestimmen (102; 202) einer Umgebungstemperatur von jedem von dem Innenraumwärmetauscher und dem Außenwärmetauscher; und
Auswählen (104, 106; 204, 206) desjenigen von dem Innenraumwärmetauscher und dem Außenwärmetauscher, der eine niedrigere Umgebungstemperatur als der Wärmetauscher aufweist.

**2.** Verfahren nach Anspruch 1, wobei die Messschritte durchgeführt werden, während ein Kompressor (22) des Kühlsystems abgeschaltet ist.

**3.** Verfahren nach Anspruch 1 oder 2, Folgendes umfassend:
vor den Messschritten und bei abgeschaltetem Kompressor Betreiben eines Gebläses (68) für eine vordefinierte Zeitdauer, um Luft durch den Wärmetauscher zu leiten.

**4.** Verfahren nach einem der vorhergehenden Ansprüche, wobei das Bestimmen, ob das Fluid eine korrekte Kühlmittelzusammensetzung beinhaltet, Folgendes umfasst:

Bestimmen einer Differenz zwischen dem gemessenen Wert und dem erwarteten Wert, die der jeweiligen von der mindestens einen von der Taupunkttemperatur und der Blasenpunkttemperatur zugeordnet sind;
Bestimmen, dass das Fluid eine korrekte Kühlmittelzusammensetzung darstellt, basierend darauf, dass jede Differenz innerhalb eines vordefinierten Fehlerschwellenwerts liegt;
Bestimmen, dass das Fluid nicht die korrekte Kühlmittelzusammensetzung darstellt, basierend darauf, dass mindestens eine der Differenzen größer als der vordefinierte Fehlerschwellenwert ist.

**5.** Verfahren nach Anspruch 4, wobei das Bestimmen, dass das Fluid nicht das korrekte Kühlmittel darstellt, das Bestimmen umfasst, dass das Fluid ein falsches Kühlmittel oder verunreinigtes Kühlmittel beinhaltet.

**6.** Verfahren nach Anspruch 4 oder 5, wobei:

die mindestens eine von der Taupunkttemperatur und der Blasenpunkttemperatur eine einzige von der Taupunkttemperatur und der Blasenpunkttemperatur umfasst; und
jede Differenz eine einzige Differenz beinhaltet.

**7.** Verfahren nach Anspruch 4 oder 5, wobei:

die mindestens eine von der Taupunkttemperatur und der Blasenpunkttemperatur jede von der Taupunkttemperatur und der Blasenpunkttemperatur umfasst; und
jede Differenz jeweils eine Taupunktdifferenz und eine Blasenpunktdifferenz beinhaltet.

**8.** Verfahren nach einem der vorhergehenden Ansprüche, wobei:

das Bestimmen eines erwarteten Werts das Bestimmen eines erwarteten Gleitens des Fluids bei dem gemessenen Druck basierend auf einer Differenz zwischen der erwarteten Taupunkttemperatur und der erwarteten Blasenpunkttemperatur umfasst; und
das Bestimmen, ob das Fluid eine korrekte Kühlmittelzusammensetzung beinhaltet, Folgendes umfasst:

Bestimmen eines tatsächlichen Gleitens des Fluids basierend auf einer Differenz zwischen der gemessenen Taupunkttemperatur und der gemessenen Blasenpunkttemperatur;
Bestimmen, dass das Fluid eine korrekte Kühlmittelzusammensetzung darstellt, basierend darauf, dass eine Gleitdifferenz zwischen dem tatsächlichen und dem erwarteten Gleiten innerhalb eines vordefinierten Fehlerschwellenwerts liegt; und
Bestimmen, dass das Fluid nicht die korrekte Kühlmittelzusammensetzung darstellt, basierend darauf, dass die Gleitdifferenz größer als der vordefinierte Fehlerschwellenwert ist.

**9.** Kühlsystem (20), Folgendes umfassend:

einen Wärmetauscher (24; 28), der konfiguriert ist, um Wärme mit Fluid in einer Kühlmittelleitung auszutauschen;
einen Drucksensor (72), der konfiguriert ist, um den Druck des Fluids zu messen;
mindestens einen Temperatursensor (74, 76), der konfiguriert ist, um die Temperatur des Fluids zu messen; und
eine Steuerung (38), die für Folgendes konfiguriert ist:

Nutzen des mindestens einen Temperatursensors zum Messen (110; 210) eines Wertes von mindestens einer von einer Taupunkttemperatur und einer Blasenpunkttemperatur des Fluids bei dem gemessenen Druck;
Bestimmen (112; 212) eines erwarteten Werts, der mindestens einer von der Taupunkttemperatur und der Blasenpunkttemperatur des Fluids bei dem gemessenen Druck zugeordnet ist; und

Bestimmen (116; 216), ob das Fluid eine korrekte Kühlmittelzusammensetzung beinhaltet, basierend auf einem Vergleich des gemessenen und des erwarteten Werts, wobei

das Kühlsystem einen Innenraumwärmetauscher (28) und einen Außenwärmetauscher (24) beinhaltet, die jeweils betreibbar sind, um Wärme mit dem Fluid in der Kühlmittelleitung auszutauschen; **dadurch gekennzeichnet, dass**

die Steuerung für Folgendes konfiguriert ist:

Bestimmen (102; 202) einer Umgebungstemperatur von jedem von dem Innenraumwärmetauscher und dem Außenwärmetauscher; und

Auswählen (104, 106; 204, 206) desjenigen von dem Innenraumwärmetauscher und dem Außenwärmetauscher, der eine niedrigere Umgebungstemperatur als der Wärmetauscher aufweist.

10. Kühlsystem nach Anspruch 9, Folgendes umfassend:

einen Kompressor (22), der konfiguriert ist, um das Fluid in der Kühlmittelleitung zu komprimieren;

wobei die Steuerung konfiguriert ist, um den Vergleich basierend auf Messwerten von dem Drucksensor und mindestens einem Temperatursensor durchzuführen, die ermittelt werden, wenn der Kompressor abgeschaltet ist.

11. Kühlsystem nach Anspruch 9 oder 10, umfassend ein Gebläse (68);

wobei die Steuerung konfiguriert ist, um das Gebläse zu betreiben, um Luft durch den Wärmetauscher für einen vordefinierten Zeitraum zu leiten, bevor die Messwerte von dem Drucksensor und dem mindestens einen Temperatursensor erhalten werden.

12. Kühlsystem nach einem der vorhergehenden Ansprüche, wobei, um zu bestimmen, ob das Fluid eine korrekte Kühlmittelzusammensetzung beinhaltet, die Steuerung für Folgendes konfiguriert ist:

Bestimmen einer Differenz zwischen dem gemessenen Wert und dem erwarteten Wert, die jeder von der mindestens einen von der Taupunkttemperatur und der Blasenpunkttemperatur zugeordnet sind;

Bestimmen, dass das Fluid eine korrekte Kühlmittelzusammensetzung darstellt, basierend darauf, dass jede Differenz innerhalb eines vordefinierten Fehlerschwellenwerts liegt;

Bestimmen, dass das Fluid nicht die korrekte Kühlmittelzusammensetzung darstellt, basierend darauf, dass mindestens eine der Differenzen größer als der vordefinierte Fehlerschwellenwert ist.

13. Kühlsystem nach Anspruch 12, wobei, um zu bestimmen, dass das Fluid nicht das korrekte Kühlmittel darstellt, die Steuerung konfiguriert ist, um zu bestimmen, dass das Fluid ein falsches Kühlmittel oder ein verunreinigtes Kühlmittel beinhaltet.

14. Kühlsystem nach Anspruch 12 oder 13, wobei:

die mindestens eine von der Taupunkttemperatur und der Blasenpunkttemperatur jede von der Taupunkttemperatur und der Blasenpunkttemperatur umfasst; und

jede Differenz jeweils eine Taupunktdifferenz und eine Blasenpunktdifferenz beinhaltet.

15. Kühlsystem nach einem der vorhergehenden Ansprüche, wobei:

zur Bestimmung des erwarteten Werts die Steuerung konfiguriert ist, um ein erwartetes Gleiten des Fluids bei dem gemessenen Druck basierend auf einer Differenz zwischen der erwarteten Taupunkttemperatur und der erwarteten Blasenpunkttemperatur zu bestimmen; und

zur Bestimmung, ob das Fluid eine korrekte Kühlmittelzusammensetzung beinhaltet, die Steuerung für Folgendes konfiguriert ist:

Bestimmen eines tatsächlichen Gleitens des Fluids basierend auf einer Differenz zwischen der gemessenen Taupunkttemperatur und der gemessenen Blasenpunkttemperatur;

Bestimmen, dass das Fluid eine korrekte Kühlmittelzusammensetzung darstellt, basierend darauf, dass eine Gleitdifferenz zwischen dem tatsächlichen und dem erwarteten Gleiten innerhalb eines vordefinierten Fehlerschwellenwerts liegt; und

Bestimmen, dass das Fluid nicht die korrekte Kühlmittelzusammensetzung darstellt, basierend darauf, dass die Gleitdifferenz größer als der vordefinierte Fehlerschwellenwert ist.

**Revendications**

1.  Procédé (100) pour un système de réfrigération (20), comprenant :

    la mesure (110) d'une pression de fluide dans une conduite de fluide frigorigène d'un échangeur de chaleur (24 ; 28) d'un système de réfrigération ;
    la mesure (110 ; 210) d'une valeur d'au moins une d'une température de point de rosée et d'une température de point de bulle du fluide à la pression mesurée ;
    la détermination (112 ; 212) d'une valeur attendue associée à ladite au moins une de la température de point de rosée et de la température de point de bulle du fluide à la pression mesurée ; et
    la détermination (116 ; 216) pour savoir si le fluide comporte une composition de fluide frigorigène correct sur la base d'une comparaison des valeurs mesurée et attendue, dans lequel
    le système de réfrigération comporte un échangeur de chaleur intérieur (28) et un échangeur de chaleur extérieur (24),
    **caractérisé par**
    le procédé comprenant :

    la détermination (102 ; 202) d'une température ambiante de chacun de l'échangeur de chaleur intérieur et de l'échangeur de chaleur extérieur ; et
    la sélection (104, 106 ; 204, 206) de celui parmi l'échangeur de chaleur intérieur et l'échangeur de chaleur extérieur qui a une température ambiante plus basse que l'échangeur de chaleur.

2.  Procédé selon la revendication 1, dans lequel les étapes de mesure sont exécutées pendant qu'un compresseur (22) du système de réfrigération est éteint.

3.  Procédé selon les revendications 1 ou 2, comprenant :
    avant les étapes de mesure et pendant que le compresseur est éteint, le fonctionnement d'un ventilateur (68) pendant une période de temps prédéfinie pour faire passer l'air à travers l'échangeur de chaleur.

4.  Procédé selon une quelconque revendication précédente, dans lequel ladite détermination pour savoir si le fluide comporte une composition de fluide frigorigène correct comprend :

    la détermination d'une différence entre la valeur mesurée et la valeur attendue associée à chacune de ladite au moins une de la température de point de rosée et de la température de point de bulle ;
    la détermination que le fluide représente une composition de fluide frigorigène correct sur la base de chaque différence se situant dans un seuil d'erreur prédéfini ;
    la détermination que le fluide ne représente pas la composition de fluide frigorigène correct sur la base d'au moins une des différences étant supérieure au seuil d'erreur prédéfini.

5.  Procédé selon la revendication 4, dans lequel ladite détermination que le fluide ne représente pas le fluide frigorigène correct comprend la détermination que le fluide comporte un fluide frigorigène incorrect ou un fluide frigorigène contaminé.

6.  Procédé selon les revendications 4 ou 5, dans lequel :

    ladite au moins une de la température de point de rosée et de la température de point de bulle comprend une seule de la température de point de rosée et de la température de point de bulle ; et
    ladite chaque différence comporte une différence unique.

7.  Procédé selon les revendications 4 ou 5, dans lequel :

    ladite au moins une de la température de point de rosée et de la température de point de bulle comprend chacune de la température de point de rosée et de la température de point de bulle ; et
    ladite chaque différence comporte une différence de point de rosée et une différence de point de bulle.

**8.** Procédé selon une quelconque revendication précédente, dans lequel :

ladite détermination d'une valeur attendue comprend la détermination d'un glissement attendu du fluide à la pression mesurée sur la base d'une différence entre les températures de point de rosée et de point de bulle attendues ; et
ladite détermination pour savoir si le fluide comporte une composition de fluide frigorigène correct comprend :

la détermination d'un glissement réel du fluide sur la base d'une différence entre les températures de point de rosée et de point de bulle mesurées ;
la détermination que le fluide représente une composition de fluide frigorigène correct sur la base d'une différence de glissement entre le glissement réel et le glissement attendu se situant dans un seuil d'erreur prédéfini ; et
la détermination que le fluide ne représente pas la composition de fluide frigorigène correct sur la base de la différence de glissement étant supérieure au seuil d'erreur prédéfini.

**9.** Système de réfrigération (20) comprenant :

un échangeur de chaleur (24 ; 28) configuré pour échanger de la chaleur avec un fluide dans une conduite de fluide frigorigène ;
un capteur de pression (72) configuré pour mesurer une pression du fluide ;
au moins un capteur de température (74, 76) configuré pour mesurer une température du fluide ; et
un dispositif de commande (38) configuré pour :

utiliser l'au moins un capteur de température pour mesurer (110 ; 210) une valeur d'au moins une d'une température de point de rosée et d'une température de point de bulle du fluide à la pression mesurée ;
déterminer (112 ; 212) une valeur attendue à ladite au moins une de la température de point de rosée et de la température de point de bulle du fluide à la pression mesurée ; et
déterminer (116 ; 216) si le fluide comporte une composition de fluide frigorigène correct sur la base d'une comparaison des valeurs mesurée et attendue, dans lequel
le système de réfrigération comporte un échangeur de chaleur intérieur (28) et un échangeur de chaleur extérieur (24) chacun pouvant fonctionner pour échanger de la chaleur avec le fluide dans la conduite de fluide frigorigène ; **caractérisé en ce que** le dispositif de commande est configuré pour :

déterminer (102 ; 202) une température ambiante de chacun de l'échangeur de chaleur intérieur et de l'échangeur de chaleur extérieur ; et
sélectionner (104, 106 ; 204, 206) celui parmi l'échangeur de chaleur intérieur et l'échangeur de chaleur extérieur qui a une température ambiante plus basse que l'échangeur de chaleur.

**10.** Système de réfrigération selon la revendication 9, comprenant :

un compresseur (22) configuré pour comprimer le fluide dans la conduite de fluide frigorigène ;
dans lequel le dispositif de commande est configuré pour exécuter la comparaison sur la base de lectures du capteur de pression et d'au moins un capteur de température prises lorsque le compresseur est éteint.

**11.** Système de réfrigération selon les revendications 9 ou 10, comprenant

un ventilateur (68) ;
dans lequel le dispositif de commande est configuré pour faire fonctionner le ventilateur pour faire passer l'air à travers l'échangeur de chaleur pendant une période de temps prédéfinie avant d'obtenir les lectures du capteur de pression et de l'au moins un capteur de température.

**12.** Système de réfrigération selon une quelconque revendication précédente, dans lequel, pour déterminer si le fluide comporte une composition de fluide frigorigène correct, le dispositif de commande est configuré pour :

déterminer une différence entre la valeur mesurée et la valeur attendue associée à chacune de ladite au moins une de la température de point de rosée et de la température de point de bulle ;
déterminer que le fluide représente une composition de fluide frigorigène correct sur la base de chaque différence se situant dans un seuil d'erreur prédéfini ;

déterminer que le fluide ne représente pas la composition de fluide frigorigène correct sur la base d'au moins une des différences étant supérieure au seuil d'erreur prédéfini.

13. Système de réfrigération selon la revendication 12, dans lequel pour déterminer que le fluide ne représente pas le fluide frigorigène correct, le dispositif de commande est configuré pour déterminer que le fluide comporte un fluide frigorigène incorrect ou un fluide frigorigène contaminé.

14. Système de réfrigération selon les revendications 12 ou 13, dans lequel :

ladite au moins une de la température de point de rosée et de la température de point de bulle comprend chacune de la température de point de rosée et de la température de point de bulle ; et
ladite chaque différence comporte une différence de point de rosée et une différence de point de bulle.

15. Système de réfrigération selon une quelconque revendication précédente, dans lequel :

pour déterminer la valeur attendue, le dispositif de commande est configuré pour déterminer un glissement attendu du fluide à la pression mesurée sur la base d'une différence entre les températures de point de rosée et de point de bulle attendues ; et
pour déterminer si le fluide comporte une composition de fluide frigorigène correct, le dispositif de commande est configuré pour :

déterminer un glissement réel du fluide sur la base d'une différence entre les températures de point de rosée et de point de bulle mesurées ;
déterminer que le fluide représente une composition de fluide frigorigène correct sur la base d'une différence de glissement entre le glissement réel et le glissement attendu se situant dans un seuil d'erreur prédéfini ; et
déterminer que le fluide ne représente pas la composition de fluide frigorigène correct sur la base de la différence de glissement étant supérieure au seuil d'erreur prédéfini.

FIG. 1

EP 4 028 702 B1

20B

48

COOLING    HEATING

HEATING    COOLING

36B

SUPPLY
AIR

34B

RETURN
AIR

28B

44

22B

46

30B

OUTDOOR
AIR

32B

24B

58

26B

REVERSE →

56

← FORWARD

CONTROLLER

38B

*FIG. 2*

**FIG. 3**

EP 4 028 702 B1

*FIG. 4*

100

FIG. 5

*FIG. 6*

*300*

**CONTROLLER**

MEMORY

*304*

PROCESSOR

*302*

COMMUNICATION
INTERFACE

*306*

# FIG. 7

**EP 4 028 702 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2014216082 A1